# EUROPEAN PATENT SPECIFICATION

(11) **EP 4 099 203 B1**
(45) Date of publication and mention of the grant of the patent: **07.08.2024**
(21) Application number: 20917170.1
(22) Date of filing: 31.01.2020
(51) Int. Cl.: G06F 21/62, G06F 21/10

(54) **DATA DISTRIBUTION MANAGEMENT APPARATUS, DATA DISTRIBUTION MANAGEMENT METHOD, AND PROGRAM**
DATENVERTEILUNGSVERWALTUNGSVORRICHTUNG, DATENVERTEILUNGSVERWALTUNGSVERFAHREN UND PROGRAMM
DISPOSITIF DE GESTION DE DISTRIBUTION DE DONNÉES, PROCÉDÉ DE GESTION DE DISTRIBUTION DE DONNÉES, ET PROGRAMME

(43) Date of publication of application: 07.12.2022
(73) Proprietor: Nippon Telegraph And Telephone Corporation, Chiyoda-ku Tokyo 100-8116 (JP)
(72) Inventor: UMAKOSHI, Kenji, Musashino-shi, Tokyo 180-8585 (JP); KASHIWAGI, Keiichiro, Musashino-shi, Tokyo 180-8585 (JP); SAITO, Yui, Musashino-shi, Tokyo 180-8585 (JP); MITANI, Koki, Musashino-shi, Tokyo 180-8585 (JP)
(74) Representative: Hoffmann Eitle
(86) International application number: PCT/JP2020/003624
(87) International publication number: WO 2021/152817

(56) References cited:
- WO-A1-2012/118205
- WO-A1-2017/154620
- US-A1- 2006 047 977
- US-A1- 2017 243 179
- US-A1- 2019 149 633
- MARC A KAPLAN: "IBM Cryptolopes, SuperDistribution and Digital Rights Management", INTERNET CITATION, 30 December 1996 (1996-12-30), XP002132994, Retrieved from the Internet <URL:http://www.research.ibm.com/people/k/kaplan/cryptolope-docs/crypap.html> [retrieved on 20000314]

## Description

### Technical Field

The present invention relates to a data distribution management apparatus, a data distribution management method, and a program.

### Background Art

Processing such as data analysis and visualization, is performed by using information held by a company or an individual person and data generated from an instrument and a sensor. A company is required to strengthen the company's competitiveness by making data analysis or service provision using not only data held by the company but also information held by a different company or a user.

There has been a growing demand for safe handling of data which is provided by a company or an individual person in recent years. Laws on data handling and ownership have been established in countries and regions. For example, in Japan, a revision concerning handling of shared data with limited access of the Unfair Competition Prevention Act was made in 2018. The revision defines data which meets certain conditions and is provided to a limited sharing partner as shared data with limited access, and unauthorized acquisition, use, and disclosure of shared data with limited access is positioned as unfair competition. In Europe and the United States, laws concerning protection of personal information such as the GDPR and the CCPA have been established, and there is an ongoing move to protect user information provided. Patent document US2006047977 represents relevant prior art.

### Citation List

### Non-Patent Literature

Non-Patent Literature 1: Uchibayashi, T, and ten others, "iKaaS-puraibashi ni hairyoshita IoT purattohomu-" (iKaaS-Privacy Preserved IoT Platform-), denshi joho tsushin gakkai rombunshi (IEICE Transactions), Vol. J101-B, No. 1, pp. 3-15
Non-Patent Literature 2: Harada, Y., "Deta gabanansu no kikaku to katsuyo ni tsuite-GDPR tono kankei no seiri" (Introduction and use of Data Governance standard ISO/IEC38505-1-implementation and use of GDPR-), kenkyu hokoku denshika chiteki zaisan shakai kiban (Research Report on Electronic Intellectual Property and Social Infrastructure), Vol. 2017-EIP-78, No. 11, pp. 1-8

### Summary of the Invention

### Technical Problem

To share data which is provided by a company or an individual person, compliance with laws in each country or each region is necessary. For example, a data provider manages a data sharing range, evidence of creation of an agreement on data sharing and traceability of data sharing are necessary, or management of a data placement location (in a country or a region) or deletion of data which no longer meets a sharing condition is necessary.

A data distribution platform which distributes data between companies is convenient for providing a service using data. The data distribution platform needs a mechanism for handling data in accordance with law.

The present invention has been devised in view of the above, and an object of the present invention is to appropriately manage and distribute data to be shared between organizations.

### Means for Solving the Problem

A data distribution management apparatus of an aspect of the present invention is a data distribution management apparatus which stores a duplicate of data stored in a dedicated data store or a pointer to the data in a shared data store and shares the data, including a proposal management unit which mediates creation of an agreement on a data sharing condition including a condition limiting data to be shared and a condition limiting a user capable of accessing the data to be shared and registers the agreed-upon data sharing condition in a proposal database, a policy management unit which registers an access control policy which is used for access control on the data to be shared in a policy database on the basis of the agreed-upon data sharing condition, and a policy enforcement unit which stores, in the shared data store, a duplicate of the data to be shared stored in the dedicated data store or a pointer to the data to be shared on the basis of the access control policy and performs access control on the data to be shared or the pointer to the data to be shared stored in the shared data store on the basis of the access control policy in response to an access request for the data to be shared.

### Effects of the Invention

According to the present invention, it is possible to appropriately manage and distribute data to be shared between organizations.

### Brief Description of Drawings

[Fig. 1] Fig. 1 is a diagram showing an overall configuration of a data distribution management system including a data distribution management apparatus of the present embodiment.
[Fig. 2] Fig. 2 is a flowchart showing the flow of a process of creating an agreement on a data sharing condition.
[Fig. 3] Fig. 3 is a flowchart showing the flow of a process of referring to data to be shared.
[Fig. 4] Fig. 4 is a flowchart showing the flow of a process of storing data.
[Fig. 5] Fig. 5 is a flowchart showing the flow of a process of storing data subject to regulation.
[Fig. 6] Fig. 6 is a flowchart showing the flow of an access process on data subject to regulation.
[Fig. 7] Fig. 7 is a diagram showing an example of a hardware configuration of the data distribution management apparatus.

### Description of Embodiments

An embodiment of the present invention will be described below with reference to the drawings.

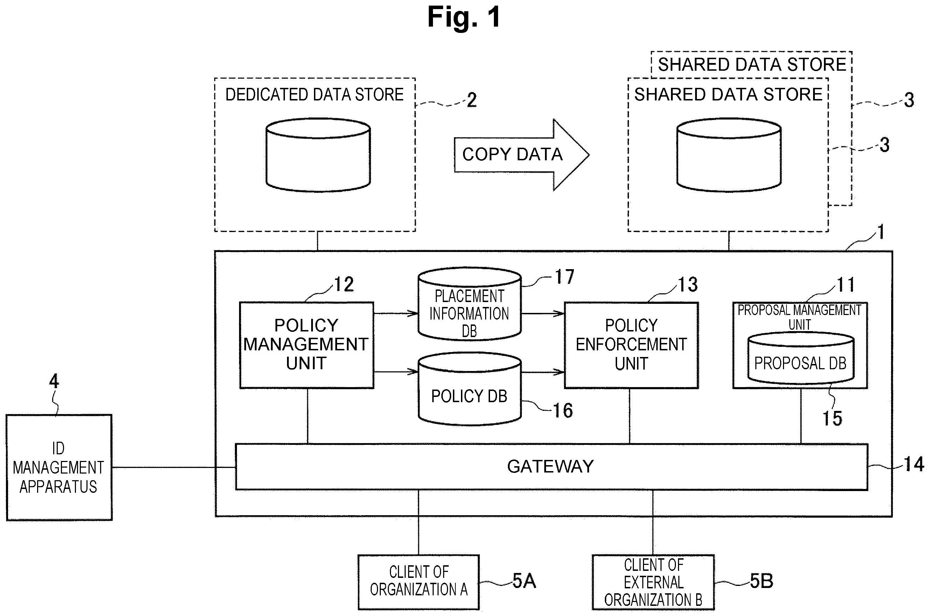

A data distribution management system including a data distribution management apparatus 1 of the present embodiment will be described with reference to Fig. 1. The data distribution management system in Fig. 1 includes a data distribution management apparatus 1, a dedicated data store 2, a shared data store 3, and an ID management apparatus 4.

The data distribution management apparatus 1 has a function of creating an agreement on a data sharing condition between organizations and a function of managing data to be shared on the basis of the agreement and distributing the data to be shared. Details of the data distribution management apparatus 1 will be described below.

The dedicated data store 2 is a data store which is used only by an organization having data to be shared and stores data which is not provided to an external organization. Hereinafter, an organization having data to be shared is referred to an organization A and an external organization is referred to as an external organization B. Data stored in the dedicated data store 2 is accessible only by a user in the organization A. The dedicated data store 2 is isolated in a network or access control by the data distribution management apparatus 1 is performed so as to prevent access from the external organization B.

The shared data store 3 is a data store which stores data to be shared with the external organization B. The shared data store 3 stores data which is obtained by copying, in read-only mode, a part (data to be shared) of data stored in the dedicated data store 2. Alternatively, data obtained by performing predetermined manipulation processing such as anonymization or abstraction on data to be shared may be stored in the shared data store 3. The shared data store 3 may store a pointer to a data main body instead of storing the data main body. The data main body stored in the dedicated data store 2 is accessible via the pointer. The following description assumes that storage of data in the shared data store 3 and duplication (copying) of the data to the shared data store 3 includes storage of a pointer to a data main body and that deletion of data from the shared data store 3 includes deletion of a pointer.

The shared data store 3 is placed at a location where the shared data store 3 is accessible via the data distribution management apparatus 1. There may be a plurality of shared data stores 3. The shared data store 3 that is different for each country or region may be placed or the shared data store 3 that is different for each type of data to be stored may be provided. Alternatively, the shared data store 3 that is different for each external organization B as a sharer may be provided.

The ID management apparatus 4 performs authentication by managing ID information for identification of a user, an organization, a group including a user and an organization, clients 5A and 5B, or an application.

The client 5A is an example of a terminal which a user of the organization A uses. The client 5A can refer to data stored in the dedicated data store 2 and the shared data store 3 via the data distribution management apparatus 1 and store data in the dedicated data store 2 and the shared data store 3. The client 5A may be able to access the dedicated data store 2 without the data distribution management apparatus 1 therebetween.

The client 5A receives a data sharing condition proposed by a user of the external organization B from the data distribution management apparatus 1 and sends, in reply, approval or disapproval of the data sharing condition. The client 5A may modify the data sharing condition and send, in reply, the data sharing condition to the data distribution management apparatus 1.

The client 5B is an example of a terminal which the user of the external organization B uses. The client 5B transmits a data sharing condition to the data distribution management apparatus 1 and requests data sharing. An agreement on the data sharing condition between the organizations is created via the data distribution management apparatus 1. Data to be shared in accordance with the agreed-upon data sharing condition is copied from the dedicated data store 2 to the shared data store 3. The client 5B can access data stored in the shared data store 3 via the data distribution management apparatus 1 on the basis of the data sharing condition.

The clients 5A and 5B may utilize a different data store (not shown) which does not require intervention of the data distribution management apparatus 1.

An example of a configuration of the data distribution management apparatus 1 will be described. The data distribution management apparatus 1 in Fig. 1 includes a proposal management unit 11, a policy management unit 12, a policy enforcement unit 13, a gateway 14, a proposal database (DB) 15, a policy DB 16, and a placement information DB 17.

The proposal management unit 11 mediates creation of an agreement on a data sharing condition between organizations and registers the data sharing condition agreed upon between the organizations in the proposal DB 15. Specifically, after the proposal management unit 11 receives data sharing proposal information including the data sharing condition from the user (the client 5B) of the external organization B that requests data sharing, the proposal management unit 11 notifies the user (the client 5A) of the organization A that has approval authority of the proposed data sharing condition. The proposal management unit 11 accepts approval or disapproval of the data sharing condition from the client 5A and registers the data sharing condition agreed upon between the organizations in the proposal DB 15. Proposer information, approver information, and approval time information may be registered in the proposal DB 15 in addition to the data sharing condition.

If the proposal management unit 11 receives a modified data sharing condition from the client 5A, the proposal management unit 11 notifies the client 5B of the modified data sharing condition. After approval is obtained from the client 5B, the proposal management unit 11 registers, in the proposal DB 15, the data sharing condition after modification as an agreed-upon data sharing condition. As described above, the clients 5A and 5B may create an agreement while modifying a data sharing condition.

The proposal management unit 11 may register a data sharing condition which is not agreed upon between organizations in the proposal DB 15. In this case, proposer information, disapprover information, and disapproval time information may be registered in the proposal DB 15 in addition to the disapproved data sharing condition.

Registration of a data sharing condition agreed upon between organizations in the proposal DB 15 by the proposal management unit 11 makes it possible to ensure traceability of agreement creation and handle data to be shared as shared data with limited access under a certain level of protection by law. It is also possible for a data provider to check a data sharing range in terms of personal information management.

A data sharing condition includes a condition limiting data to be shared and a condition limiting a user (which may be an organization or a group) capable of accessing the data to be shared. The data sharing condition may include a condition limiting a data utilization period or expiration date or a user position, a condition on a data utilization purpose or a data provision destination region, or a condition specifying a part of a data schema.

The policy management unit 12 generates an access control policy corresponding to an agreed-upon data sharing condition and registers the access control policy in the policy DB 16. The access control policy is information defining access authority over data and is used for access control on data to be shared. For example, the access control policy includes information limiting a target user, organization, or group, a condition limiting target data (data to be shared), and an expiration date of the policy. The access control policy may include the two types of formats: hierarchized information (YAML format) limiting a user and information (JSON format) on the other conditions. The policy management unit 12 may transmit a policy identifier for unique identification of the registered access control policy to the organizations (the clients 5A and 5B) which have agreed upon the data sharing condition.

The policy management unit 12 selects the shared data store 3 that is to store data to be shared on the basis of the agreed-upon data sharing condition and registers data placement information indicating a data store which is to store data to be shared in the placement information DB 17. For example, the policy management unit 12 selects the shared data store 3 that is placed in a country or a region for data of a type which is restricted in data movement to outside the country or the region. Alternatively, the policy management unit 12 may select the shared data store 3 that is to store data in accordance with the type of the data.

The policy enforcement unit 13 copies data which is a target of access control based on an access control policy based on a data sharing condition from the dedicated data store 2 to the shared data store 3 at a predetermined timing after the access control policy is registered in the policy DB 16. As for the copying of the data from the dedicated data store 2 to the shared data store 3, a duplicate of the data may be stored in the shared data store 3 or a pointer to the data stored in the dedicated data store 2 may be stored in the shared data store 3. At this time, the policy enforcement unit 13 refers to the placement information DB 17 and identifies the shared data store 3 that is to store the data to be shared. At the time of storage of data in the shared data store 3, the policy enforcement unit 13 may subject the data to predetermined manipulation processing. The predetermined manipulation processing refers to, for example, a process of, if the type of the data is personal information, deleting information for identification of an individual person, anonymizing the personal information, and abstracting the data. Types of data, which are subjected to the predetermined manipulation processing, include data stipulated by law. For example, the data is a user profile, payment information, medical information, government and civil service information, or the like.

The policy enforcement unit 13 determines whether access to requested data is possible on the basis of the access control policy in response to a data reference request sent from the client 5B. If the policy enforcement unit 13 determines that access to the requested data is allowed, the policy enforcement unit 13 acquires data or a pointer to the data from the shared data store 3 and transmits the data or the pointer to the client 5B. If necessary, the policy enforcement unit 13 subjects the data acquired from the shared data store 3 to the manipulation processing and then transmits the data to the client 5B.

When the access control policy becomes invalid (e.g., when an expiration date of the access control policy passes or when the access control policy is deleted), the policy enforcement unit 13 deletes data or a pointer to the data which is a target of access control based on the access control policy from the shared data store 3.

The policy enforcement unit 13 stores received data in the dedicated data store 2 on the basis of the access control policy in response to a data storage request sent from the client 5A and, if the received data corresponds to data to be shared, stores the data in the shared data store 3. If necessary, the policy enforcement unit 13 subjects the data to necessary manipulation processing and then stores the data in the shared data store 3.

The gateway 14 performs signal transmission and reception between the clients 5A and 5B and authentication of the clients 5A and 5B. Specifically, after the gateway 14 receives data sharing proposal information, a data reference request, and a data storage request from the clients 5A and 5B, the gateway 14 authenticates the clients 5A and 5B utilizing the ID management apparatus 4 and executes processing to meet the requests utilizing functions of the data distribution management apparatus 1.

Operation of the data distribution management apparatus 1 will be described.

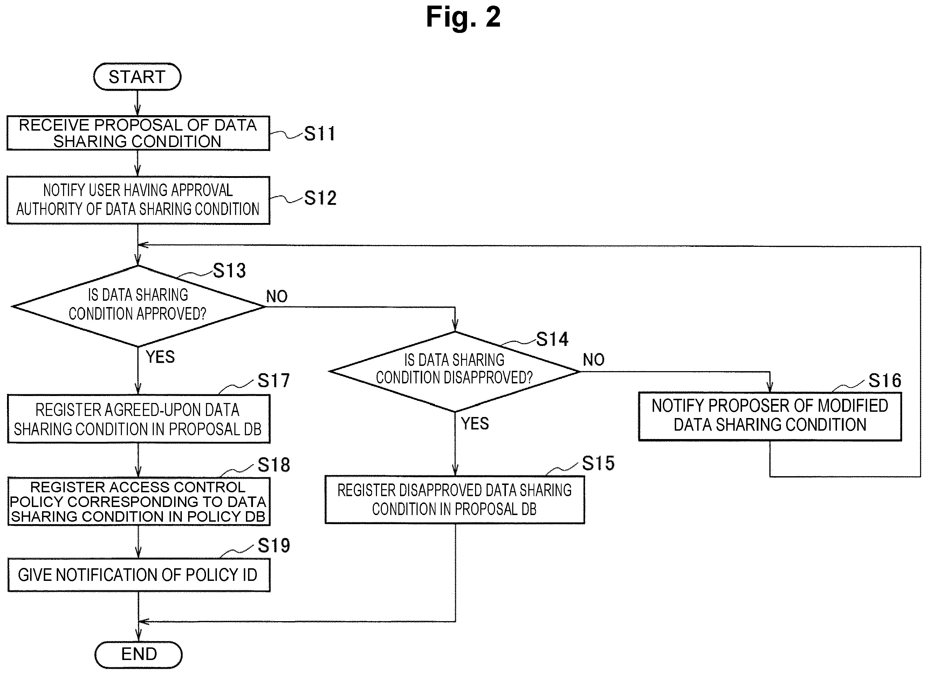

A process of creating an agreement on a data sharing condition will be described first with reference to Fig. 2.

In step S11, the gateway 14 receives data sharing proposal information including a data sharing condition from a proposer (the client 5B) of the external organization B. The received data sharing proposal information is passed to the proposal management unit 11.

In step S12, the proposal management unit 11 notifies an approver (the client 5A) which has approval authority of the data sharing condition. Note that, if there are a plurality of approvers which are to give approval of a proposal, the proposal management unit 11 notifies all the users of the data sharing condition.

In step S13, the proposal management unit 11 determines whether the data sharing condition is approved on the basis of an approval result sent from the client 5A. If approval from a plurality of approvers is necessary, the proposal management unit 11 determines whether all the approvers have given approval.

In step S14, the proposal management unit 11 determines whether the data sharing condition is disapproved on the basis of the approval result sent from the client 5A.

If the data sharing condition is disapproved, the proposal management unit 11 registers the disapproved data sharing condition in the proposal DB 15 in step S15. At this time, the proposal management unit 11 may register proposer information, disapprover information, and disapproval time information in the proposal DB 15.

If the data sharing condition is modified without being approved or disapproved, the proposal management unit 11 notifies the proposer of the modified data sharing condition in step S16 and the process is advanced to step S13. In step S13, the proposal management unit 11 determines whether the modified data sharing condition is approved by all persons including the proposer.

If an agreement on the data sharing condition is created, the proposal management unit 11 registers the agreed-upon data sharing condition in the proposal DB 15 in step S17. At this time, the proposal management unit 11 may register proposer information, approver information, and approval time information in the proposal DB 15.

In step S18, the policy management unit 12 registers an access control policy corresponding to the agreed-upon data sharing condition in the policy DB 16 and registers data placement information of data to be shared in the placement information DB 17.

In step S19, the policy management unit 12 notifies the proposer and the approver(s) of an identifier of the access control policy registered in the policy DB 16.

With the above-described process, a data sharing condition is agreed upon, and an access control policy corresponding to the data sharing condition is registered in the policy DB 16.

After the access control policy is registered, the policy enforcement unit 13 refers to the access control policy registered in the policy DB 16 and identifies data to be shared, refers to data placement information which is registered in the placement information DB 17 and identifies the shared data store 3 that is to store the data to be shared, and copies the data to be shared from the dedicated data store 2 to the shared data store 3. At the time of storage of data in the shared data store 3, the policy enforcement unit 13 may subject the data to the predetermined manipulation processing in accordance with the type of the data. The copying of the data to be shared may be performed immediately after the registration of the access control policy or may be performed when a data reference request based on the registered access control policy is received. The copying of the data to be shared may be performed at a predetermined timing or in response to an instruction from a manager.

If an expiration date of the access control policy passes or the access control policy becomes invalid, the policy enforcement unit 13 deletes data on the shared data store 3 corresponding to the access control policy.

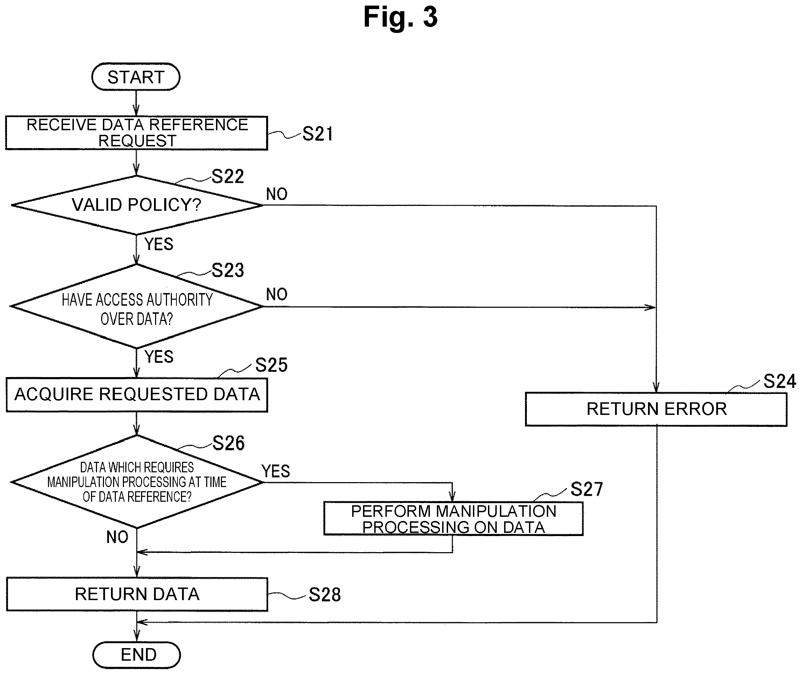

A process of referring to data to be shared will be described with reference to Fig. 3.

In step S21, the gateway 14 receives a data reference request from a user (the client 5B) of the external organization B. The received data reference request is passed to the policy enforcement unit 13. The data reference request includes a policy identifier and a search criterion for identification of requested data. The data reference request may include information for identification of the user.

In step S22, the policy enforcement unit 13 determines whether an access control policy which is identified by the policy identifier is valid. For example, the policy enforcement unit 13 determines whether the access control policy identified by the policy identifier is registered in the policy DB 16 and whether the access control policy is unexpired.

If the access control policy is valid, the policy enforcement unit 13 determines presence or absence of access authority over the requested data in step S23. For example, the policy enforcement unit 13 refers to the access control policy and determines whether the access control policy is targeted for the user that is a transmitter of the data reference request and whether the requested data is a target. The presence or absence of access authority over the data may be determined on the basis of the user or a group to which the user belongs.

If the access control policy is not valid or if the user does not have access authority over the data, the policy enforcement unit 13 returns an error to the client 5B via the gateway 14 in step S24. A source of an error, such as invalidity of the access control policy or absence of access authority, may be included in the error.

If the user has access authority over the data, the policy enforcement unit 13 acquires the requested data from the shared data store 3 in step S25. More specifically, the policy enforcement unit 13 refers to data placement information which is registered in the placement information DB 17, identifies the shared data store 3 where the requested data is stored, and acquires the requested data from the shared data store 3.

In step S26, the policy enforcement unit 13 determines whether the predetermined manipulation process is necessary for the acquired data.

If the processing is necessary for the data, the policy enforcement unit 13 subjects the data to the predetermined manipulation processing in step S27.

In step S28, the policy enforcement unit 13 returns the requested data to the client 5B via the gateway 14. If the data is subjected to the manipulation processing is step S27, the data subjected to the manipulation processing is returned.

The data distribution management apparatus 1 mediates an agreement on a data sharing condition each time a proposal for data sharing is submitted. After a data sharing condition is agreed upon, the data distribution management apparatus 1 duplicates data to be shared from the dedicated data store 2 to the shared data store 3 and performs access control on the data to be shared. This allows easy implementation of granting of temporary access authority over data and contribution to promotion of data distribution.

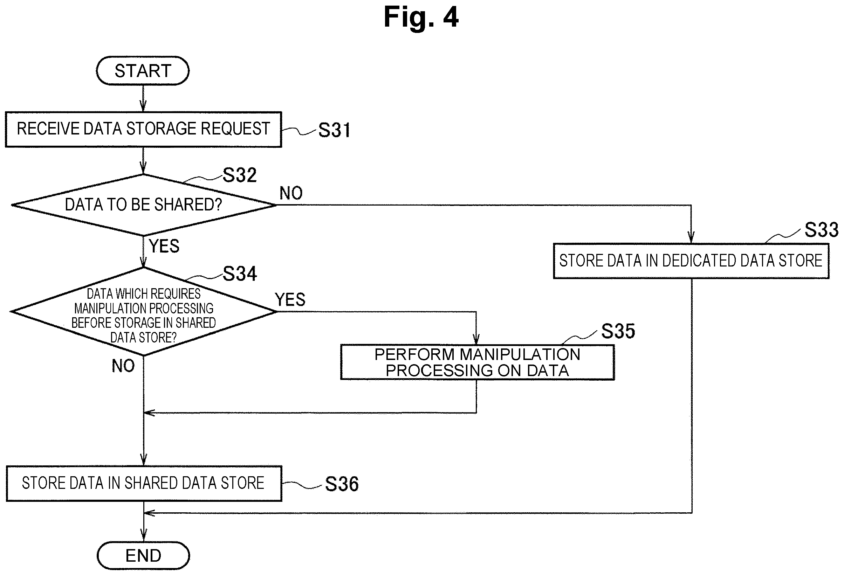

A process of storing data will be described with reference to Fig. 4.

In step S31, the gateway 14 receives a data storage request from a user (the client 5A) in the organization A. The received data storage request is passed to the policy enforcement unit 13.

In step S32, the policy enforcement unit 13 determines whether data to be stored corresponds to data to be shared.

If the data to be stored does not correspond to data to be shared, the policy enforcement unit 13 stores the received data in the dedicated data store 2 in step S33.

If the data to be stored corresponds to data to be shared, the policy enforcement unit 13 determines, in step S34, whether the data is data which requires the predetermined manipulation processing at the time of storage of the data.

If the processing is necessary for the data, the policy enforcement unit 13 subjects the data to the predetermined manipulation processing in step S35.

In step S36, the policy enforcement unit 13 stores the data in the shared data store 3. If the data is subjected to the manipulation processing in step S35, the data subjected to the manipulation processing is stored in the shared data store 3.

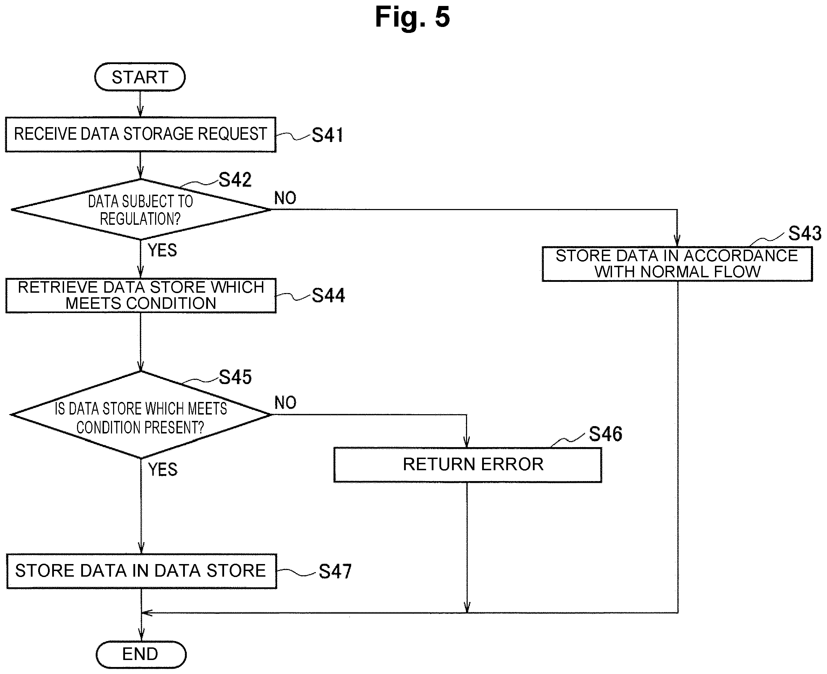

A process of storing data subject to regulation will be described with reference to Fig. 5. The data subject to regulation is data of a type subject to regulation by law. The data subject to regulation is restricted in a storage location, is restricted in duplication of date, or is restricted in movement to outside an organization or a country.

In step S41, the gateway 14 receives a data storage request from a user (the client 5A) in the organization A. The received data storage request is passed to the policy enforcement unit 13.

In step S42, the policy enforcement unit 13 determines whether data to be stored is data subject to regulation.

If the data is not data subject to regulation, the policy enforcement unit 13 stores the data in accordance with the normal flow shown in Fig. 4 in step S43.

If the data is data subject to regulation, the policy enforcement unit 13 retrieves the shared data store 3 that meets a condition which is stipulated by law in step S44. For example, if the data to be stored is data subject to regulation, movement of which to outside a country is prohibited, the policy enforcement unit 13 retrieves the shared data store 3 that is placed in the country.

In step S45, the policy enforcement unit 13 determines whether the shared data store 3 that meets the condition is present.

If there is no data store that meets the condition, the policy enforcement unit 13 transmits an error to the client 5A via the gateway 14 in step S46.

Alternatively, if there is any data store that meets the condition, the policy enforcement unit 13 stores the data in the shared data store 3 retrieved in step S44 and registers data placement information of the shared data store 3 storing the data in the placement information DB 17 in step S47.

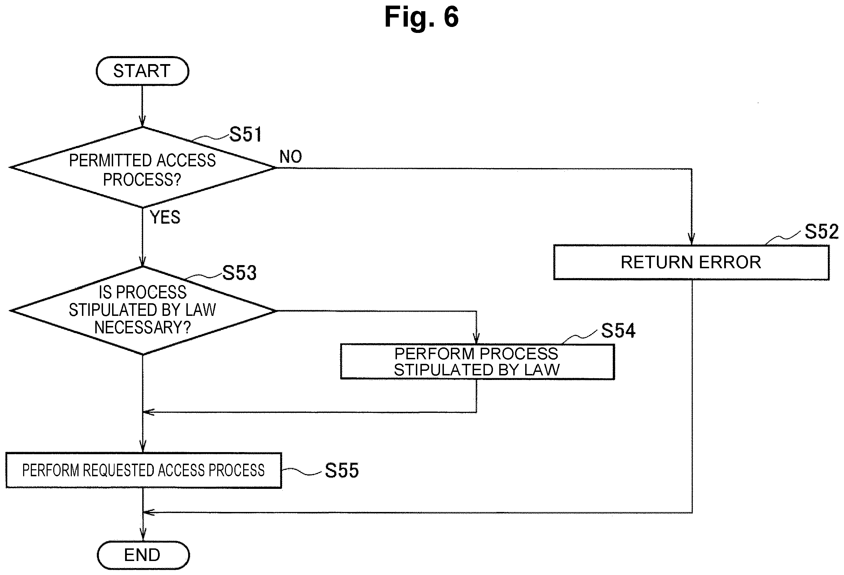

An access process on data subject to regulation will be described with reference to Fig. 6. Examples of the access process include processing such as reference, duplication, or movement. Assume that a data reference request for requesting access to data subject to regulation is handled in accordance with the flowchart in Fig. 3 and that a user which is a requestor of data is determined to have access authority over the data subject to regulation.

In step S51, the policy enforcement unit 13 determines whether an access process which is requested for data subject to regulation is a process permitted by law. For example, suppose that duplication of the data subject to regulation is prohibited and the access process requests duplication of the data subject to regulation. In the above case, the access process is determined to be not permitted by law. If taking out of the data subject to regulation to outside a country where the shared data store 3 that stores the data subject to regulation is placed is prohibited in the country, the access process on the data subject to regulation requested by a user which is a requestor of the data subject to regulation is determined to be not permitted by law when the user is present outside the country. If sharing of the data subject to regulation is not permitted in a country where the user that requests the access process on the data subject to regulation is present, the access process on the data subject to regulation is determined to be not permitted by law.

If the desired access process on the data subject to regulation is not permitted, the policy enforcement unit 13 transmits an error to the client 5B via the gateway 14 in step S52.

If the desired access process on the data subject to regulation is permitted, the policy enforcement unit 13 determines, in step S53, whether processing which is stipulated by law is necessary at the time of the access process on the data subject to regulation.

If the processing stipulated by law is necessary, the policy enforcement unit 13 performs the processing stipulated by law in step S54.

In step S55, the policy enforcement unit 13 performs the access process requested for the data subject to regulation. At this time, the policy enforcement unit 13 performs the requested access process utilizing a network and a proxy which meet a condition provided by law. For example, if movement of the data subject to regulation to outside a country is prohibited, the policy enforcement unit 13 performs the requested access process utilizing a network which bypasses a route outside the country. If the condition provided by law may not be met, the policy enforcement unit 13 transmits an error to the client 5B via the gateway 14.

As has been described above, according to the present embodiment, the proposal management unit 11 mediates creation of an agreement on a data sharing condition including a condition limiting data to be shared and a condition limiting a user capable of accessing the data to be shared and registers the agreed-upon data sharing condition in the proposal DB 15. The policy management unit 12 registers, in a policy database, an access control policy used for access control on data to be shared on the basis of the agreed-upon data sharing condition. The policy enforcement unit 13 duplicates the data to be shared on the basis of the access control policy from the dedicated data store 2 to the shared data store 3 and performs access control on the data to be shared on the basis of the access control policy in response to a data reference request. This makes it possible to ensure evidence of agreement creation and traceability of data sharing and appropriately manage and distribute data to be shared between organizations.

According to the present embodiment, provision of a plurality of shared data stores 3 and dispersion of storage locations for data to be shared make it possible to manage data in accordance with law such as restriction in a data storage location or restriction in data movement.

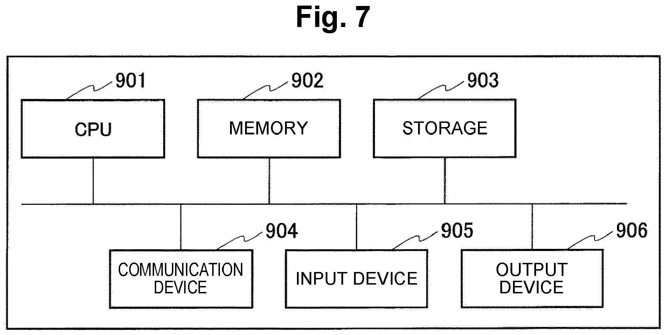

As the data distribution management apparatus 1 described above, for example, a general-purpose computer system including a central processing unit (CPU) 901, a memory 902, a storage 903, a communication device 904, an input device 905, and an output device 906, as shown in Fig. 7 can be used. In the computer system, the CPU 901 executes a predetermined program which is loaded into the memory 902, thereby implementing the data distribution management apparatus 1. The program can be recorded on a computer-readable recording medium such as a magnetic disk, an optical disc, or a semiconductor memory, or can be delivered via a network.

### Reference Signs List

- 1: Data distribution management apparatus
- 11: Proposal management unit
- 12: Policy management unit
- 13: Policy enforcement unit
- 14: Gateway
- 15: Proposal DB
- 16: Policy DB
- 17: Placement information DB
- 2: Dedicated data store
- 3: Shared data store
- 4: ID management apparatus
- 5A, 5B: Client

## Claims

1. A data distribution management apparatus that stores a duplicate of data stored in a dedicated data store or a pointer to the data in a shared data store and shares the data, the data distribution management apparatus comprising:
a proposal management unit that mediates creation of an agreement on a data sharing condition including a condition limiting data to be shared and a condition limiting a user capable of accessing the data to be shared and registers the agreed-upon data sharing condition in a proposal database;
a policy management unit that registers an access control policy which is used for access control on the data to be shared in a policy database on the basis of the agreed-upon data sharing condition; and
a policy enforcement unit which stores, in the shared data store, a duplicate of the data to be shared stored in the dedicated data store or a pointer to the data to be shared on the basis of the access control policy and
performs access control on the data to be shared or the pointer to the data to be shared stored in the shared data store on the basis of the access control policy in response to an access request for the data to be shared.

2. The data distribution management apparatus according to claim 1, wherein
the policy enforcement unit deletes the data to be shared or the pointer to the data to be shared from the shared data store when the access control policy becomes invalid.

3. The data distribution management apparatus according to claim 1 or 2, wherein
the policy enforcement unit determines whether data to be stored corresponds to the data to be shared in response to a data storage request, stores the data to be stored in the dedicated data store and stores a duplicate of the data to be stored or a pointer to the data to be stored in the shared data store if the data to be stored corresponds to the data to be shared, and stores the data to be stored in the dedicated data store if the data to be stored does not correspond to the data to be shared.

4. The data distribution management apparatus according to claim 3, wherein
if manipulation processing on the data to be shared is stipulated in the access control policy, the policy enforcement unit performs the manipulation processing on the data to be shared at the time of transmission or storage of the data to be shared.

5. The data distribution management apparatus according to any one of claims 1 to 4,
wherein
data is shared utilizing a plurality of shared data stores,
the policy enforcement unit selects a shared data store that is to store the data to be shared on the basis of a type of the data to be shared and registers data placement information indicating the shared data store in a placement information database, and
the policy enforcement unit refers to the access control policy and the data placement information and performs access control on the data to be shared or the pointer to the data to be shared.

6. The data distribution management apparatus according to claim 5, wherein
the policy enforcement unit selects a shared data store that meets a condition stipulated by law if the type of the data to be shared is a type subject to restriction by law.

7. A data distribution management method for storing a duplicate of data stored in a dedicated data store or a pointer to the data in a shared data store and sharing the data, wherein a computer
mediates creation of an agreement on a data sharing condition including a condition limiting data to be shared and a condition limiting a user capable of accessing the data to be shared and registers the agreed-upon data sharing condition in a proposal database, registers an access control policy that is used for access control on the data to be shared in a policy database on the basis of the agreed-upon data sharing condition, stores, in the shared data store, a duplicate of the data to be shared stored in the dedicated data store or a pointer to the data to be shared on the basis of the access control policy, and
performs access control on the data to be shared or the pointer to the data to be shared stored in the shared data store on the basis of the access control policy in response to an access request for the data to be shared.

8. A program for causing a computer to operate as each unit of the data distribution management apparatus according to any one of claims 1 to 6.

## Patentansprüche

1. Datenverteilungsverwaltungsvorrichtung, die ein Duplikat von in einem dedizierten Datenspeicher gespeicherten Daten oder einen Zeiger auf die Daten in einem geteilten Datenspeicher speichert und die Daten teilt, wobei die Datenverteilungsverwaltungsvorrichtung umfasst:
eine Vorschlagsverwaltungseinheit, die die Erzeugung einer Vereinbarung über eine Datenteilungsbedingung vermittelt, einschließlich einer Bedingung, die zu teilende Daten einschränkt, und einer Bedingung, die einen Benutzer, der auf die zu teilenden Daten zugreifen kann, einschränkt, und die vereinbarte Datenteilungsbedingung in einer Vorschlagsdatenbank registriert;
eine Richtlinienverwaltungseinheit, die eine Zugriffssteuerungsrichtlinie, die für die Zugriffssteuerung auf die zu teilenden Daten verwendet wird, in einer Richtliniendatenbank auf der Grundlage der vereinbarten Datenteilungsbedingung registriert; und
eine Richtliniendurchsetzungseinheit, die in dem geteilten Datenspeicher ein Duplikat der zu teilenden Daten, die in dem dedizierten Datenspeicher gespeichert sind, oder einen Zeiger auf die zu teilenden Daten auf der Grundlage der Zugriffssteuerungsrichtlinie speichert und
eine Zugriffssteuerung auf die zu teilenden Daten oder den Zeiger auf die zu teilenden Daten, die in dem geteilten Datenspeicher gespeichert sind, auf der Grundlage der Zugriffssteuerungsrichtlinie als Reaktion auf eine Zugriffsanfrage für die zu teilenden Daten durchführt.

2. Datenverteilungsverwaltungsvorrichtung nach Anspruch 1, wobei die Richtliniendurchsetzungseinheit die zu teilenden Daten oder den Zeiger auf die zu teilenden Daten aus dem geteilten Datenspeicher löscht, wenn die Zugriffssteuerungsrichtlinie ungültig wird.

3. Datenverteilungsverwaltungsvorrichtung nach Anspruch 1 oder 2,
wobei die Richtliniendurchsetzungseinheit als Reaktion auf eine Datenspeicheranfrage bestimmt, ob die zu speichernden Daten den zu teilenden Daten entsprechen, die zu speichernden Daten in dem dedizierten Datenspeicher speichert und ein Duplikat der zu speichernden Daten oder einen Zeiger auf die zu speichernden Daten in dem geteilten Datenspeicher speichert, wenn die zu speichernden Daten den zu teilenden Daten entsprechen, und die zu speichernden Daten in dem dedizierten Datenspeicher speichert, wenn die zu speichernden Daten nicht den zu teilenden Daten entsprechen.

4. Datenverteilungsverwaltungsvorrichtung nach Anspruch 3, wobei, wenn eine Manipulationsverarbeitung an den zu teilenden Daten in der Zugriffssteuerungsrichtlinie festgelegt ist, die Richtliniendurchsetzungseinheit die Manipulationsverarbeitung an den zu teilenden Daten zum Zeitpunkt der Übertragung oder Speicherung der zu teilenden Daten durchführt.

5. Datenverteilungsverwaltungsvorrichtung nach einem der Ansprüche 1 bis 4, wobei die Daten unter Verwendung einer Vielzahl von geteilten Datenspeichern geteilt werden, die Richtliniendurchsetzungseinheit einen geteilten Datenspeicher auswählt, der die zu teilenden Daten auf der Grundlage eines Typs der zu teilenden Daten speichern soll, und Datenplatzierungsinformationen, die den geteilten Datenspeicher anzeigen, in einer Platzierungsinformationsdatenbank registriert, und die Richtliniendurchsetzungseinheit sich auf die Zugriffssteuerungsrichtlinie und die Datenplatzierungsinformationen bezieht und eine Zugriffssteuerung auf die zu teilenden Daten oder den Zeiger auf die zu teilenden Daten durchführt.

6. Datenverteilungsverwaltungsvorrichtung nach Anspruch 5, wobei
die Richtliniendurchsetzungseinheit einen geteilten Datenspeicher auswählt, der eine gesetzlich festgelegte Bedingung erfüllt, wenn der Typ der zu teilenden Daten ein Typ ist, der einer gesetzlichen Beschränkung unterliegt.

7. Datenverteilungsverwaltungsverfahren zum Speichern eines Duplikats von in einem dedizierten Datenspeicher gespeicherten Daten oder eines Zeigers auf die Daten in einem geteilten Datenspeicher und zum Teilen der Daten, wobei ein Computer
die Erzeugung einer Vereinbarung über eine Datenteilungsbedingung vermittelt, einschließlich einer Bedingung zur Einschränkung der zu teilenden Daten und einer Bedingung zur Einschränkung eines Benutzers, der auf die zu teilenden Daten zugreifen kann, und die vereinbarte Datenteilungsbedingung in einer Vorschlagsdatenbank registriert,
eine Zugriffssteuerungsrichtlinie, die für die Zugriffssteuerung auf die zu teilenden Daten verwendet wird, auf der Grundlage der vereinbarten Datenteilungsbedingung in einer Richtliniendatenbank registriert, in dem geteilten Datenspeicher ein Duplikat der zu teilenden Daten, die in dem dedizierten Datenspeicher gespeichert sind, oder einen Zeiger auf die zu teilenden Daten auf der Grundlage der Zugriffssteuerungsrichtlinie speichert und
eine Zugriffssteuerung auf die zu teilenden Daten oder den Zeiger auf die zu teilenden Daten, die in dem geteilten Datenspeicher gespeichert sind, auf der Grundlage der Zugriffssteuerungsrichtlinie als Reaktion auf eine Zugriffsanfrage für die zu teilenden Daten durchführt.

8. Programm, um einen Computer zu veranlassen, als jede Einheit der Datenverteilungsverwaltungsvorrichtung nach einem der Ansprüche 1 bis 6 zu arbeiten.

## Revendications

1. Appareil de gestion de distribution de données qui stocke un double de données stockées dans une mémoire de données dédiée ou un pointeur vers les données dans une mémoire de données partagée et partage les données, l'appareil de gestion de distribution de données comprenant :
une unité de gestion de proposition qui médie la création d'un accord concernant une condition de partage de données incluant une condition limitant les données à partager et une condition limitant un utilisateur apte à accéder aux données à partager et enregistre la condition de partage de données convenue dans une base de données de propositions ;
une unité de gestion de politique qui enregistre une politique de commande d'accès qui est utilisée pour une commande d'accès sur les données à partager dans une base de données de politiques sur la base de la condition de partage de données convenue ; et
une unité de mise en application de politique qui stocke, dans la mémoire de données partagée, un double des données à partager stockées dans la mémoire de données dédiée ou un pointeur vers les données à partager sur la base de la politique de commande d'accès et
met en oeuvre une commande d'accès sur les données à partager ou le pointeur vers les données à partager stockées dans la mémoire de données partagée sur la base de la politique de commande d'accès en réponse à une demande d'accès pour les données à partager.

2. Appareil de gestion de distribution de données selon la revendication 1, dans lequel
l'unité de mise en application de politique supprime les données à partager ou le pointeur vers les données à partager de la mémoire de données partagée lorsque la politique de commande d'accès devient invalide.

3. Appareil de gestion de distribution de données selon la revendication 1 ou la revendication 2, dans lequel
l'unité de mise en application de politique détermine si des données à stocker correspondent aux données à partager en réponse à une demande de stockage de données, stocke les données à stocker dans la mémoire de données dédiée et stocke un double des données à stocker ou un pointeur vers les données à partager dans la mémoire de données partagée si les données à stocker correspondent aux données à partager, et stocke les données à stocker dans la mémoire de données dédiée si les données à stocker ne correspondent pas aux données à partager.

4. Appareil de gestion de distribution de données selon la revendication 3, dans lequel
si un traitement de manipulation sur les données à partager est stipulé dans la politique de commande d'accès, l'unité de mise en application de politique met en oeuvre le traitement de manipulation sur les données à partager au moment de la transmission ou du stockage des données à partager.

5. Appareil de gestion de distribution de données selon l'une quelconque des revendications 1 à 4, dans lequel
des données sont partagées en utilisant une pluralité de mémoires de données partagées,
l'unité de mise en application de politique sélectionne une mémoire de données partagée qui doit stocker les données à partager sur la base d'un type des données à partager et enregistre des informations de placement de données indiquant la mémoire de données partagée dans une base de données d'informations de placement, et
l'unité de mise en application de politique se réfère à la politique de commande d'accès et aux informations de placement de données et met en oeuvre une commande d'accès sur les données à partager ou le pointeur vers les données à partager.

6. Appareil de gestion de distribution de données selon la revendication 5, dans lequel
l'unité de mise en application de politique sélectionne une mémoire de données partagée qui satisfait à une condition stipulée par la loi si le type des données à partager est un type sujet à restriction par la loi.

7. Procédé de gestion de distribution de données pour stocker un double de données stockées dans une mémoire de données dédiée ou un pointeur vers les données dans une mémoire de données partagée et partager les données, dans lequel un ordinateur
médie la création d'un accord concernant une condition de partage de données incluant une condition limitant les données à partager et une condition limitant un utilisateur apte à accéder aux données à partager et enregistre la condition de partage de données convenue dans une base de données de propositions,
enregistre une politique de commande d'accès qui est utilisée pour une commande d'accès sur les données à partager dans une base de données de politiques sur la base de la condition de partage de données convenue, stocke, dans la mémoire de données partagée, un double des données à partager stockées dans la mémoire de données dédiée ou un pointeur vers les données à partager sur la base de la politique de commande d'accès, et
met en oeuvre une commande d'accès sur les données à partager ou le pointeur vers les données à partager stockées dans la mémoire de données partagées sur la base de la politique de commande d'accès en réponse à une demande d'accès pour les données à partager.

8. Programme pour amener un ordinateur à fonctionner en tant que chaque unité de l'appareil de gestion de distribution de données selon l'une quelconque des revendications 1 à 6.
